# EUROPEAN PATENT SPECIFICATION

(11) **EP 2 232 796 B1**
(45) Date of publication and mention of the grant of the patent: **25.05.2011**
(21) Application number: 08862322.8
(22) Date of filing: 19.12.2008
(51) Int. Cl.: H04L 12/58, H04L 29/08

(54) **SYSTEM AND METHOD FOR PROCESSING MESSAGES**
SYSTEM UND VERFAHREN ZUM VERARBEITEN VON NACHRICHTEN
SYSTÈME ET PROCÉDÉ POUR LE TRAITEMENT DE MESSAGES

(30) Priority: 19.12.2007 GB 0724712; 19.09.2008 GB 0817129
(43) Date of publication of application: 29.09.2010
(73) Proprietor: CVON Innovations Ltd, London, Greater London W1F 7BY (GB)
(72) Inventor: OHRLING, Antti, London Greater London SW5 0ET (GB); AALTONEN, Janne, FI-20900 Turku (FI); SARU, Sami, FI-20540 Turku (FI); MOORE, Alan, Cambridge CB24 5PT (GB); AHONEN, Tomi, London WC1V 6HU (GB)
(74) Representative: Price, Christopher
(86) International application number: PCT/EP2008/068094
(87) International publication number: WO 2009/077621

(56) References cited:
- EP-A- 1 583 302
- WO-A-01/80031
- US-A1- 2007 088 851
- US-A1- 2007 266 090
- "Digital cellular telecommunications system (Phase 2+); Universal Mobile Telecommunications System (UMTS); Technical realization of Short Message Service (SMS) (3GPP TS 23.040 version 7.0.1 Release 7); ETSI TS 123 040" ETSI STANDARD, EUROPEAN TELECOMMUNICATIONS STANDARDS INSTITUTE (ETSI), SOPHIA ANTIPOLIS CEDEX, FRANCE, 1 March 2007 (2007-03-01), XP014037705 cited in the application

## Description

### Field of the Invention

The present invention relates in general to communication via messaging in a telecommunications network. In particular, the present invention relates to processing messages based at least in part on character strings included in the content of the messages.

### Background of the Invention

Messaging in telecommunications networks, in which messages are sent between user terminals such as personal computers, mobile telephones, Personal Digital Assistants and so on, has become extremely popular. There are a variety of messaging formats, such as e-mail, Short Message Service (SMS) messages and Multimedia Messaging Service (MMS) messages. However, messages such as SMS messages have limited message text lengths because of a limitation on the size of such messages. As a result, mobile device users often use abbreviations to convey information in smaller character strings, e.g., LOL = Laugh Out Loud. Similarly, "emoticons" are used to convey context of other characters included in a message. An emoticon is a symbol or combination of symbols used to convey emotional content in written or message form. Some examples of text-based emoticons include: :) :( ;). Further examples of such conventional emoticons and their corresponding meanings are provided in Table 1.

**TABLE 1**

| **EMOTICON** | **MEANING** | **EMOTICON** | **MEANING** |
|---|---|---|---|
| :-) | CLASSIC SMILE WITH NOSE | :'-) | HAPPY CRYING |
| :-( | CLASSIC SAD WITH NOSE | \|-O | YAWN |
| :) | SMILE WITHOUT NOSE | :-D | LAUGHTER |
| >:) | EVIL GRIN | %-( | CONFUSED |
| :( | SAD WITHOUT NOSE | :@ | WHAT??? (SERIOUSLY?) |
| :-\| | INDIFFERENT | ;) | WINKING SMILE WITHOUT NOSE |
| ;-) | WINKING SMILE WITH NOSE | ':-) | ONE EYEBROW RAISED |
| O:-) | I'M AN ANGEL | :P | TONGUE STICKING OUT (SILLY) |

Various communication services, e.g., Skype™, allow users to add emoticons to chat messages between users. Such emoticons may be selected by a user from a set of predetermined emoticons (in the same manner described in U.S. Pat. Pub. 20070266090). In such services, an application, running on a user's mobile device and/or one or more servers translates specified character strings, e.g., :), to an associated graphic 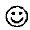 . As a result, the translation may appear as an automatic change while in practice, the application on the user device changes character strings like :) to 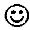 , (c) to ⓒ, :( to 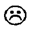 etc. Similar automatic change of character string are implemented in, for example, some word processing programs such as Microsoft® Word®. Similarly, some mobile domain Japanese handsets use a support format, Decomail, where in practice the message from a terminal to other terminal is html-based with several different emoticons agreed. The Decomail specification is basically Hyperlink Text Markup Lanaguage (HTML) mail with embedded images.

The selection of such emoticons, and of other types of content for such messages is time consuming and may be limited by the capabilities of the device on which the message is composed and/or the capabilities of the receiving device.

### Summary of the Invention

In accordance with at least one embodiment of the invention, methods, systems and software are provided for supporting or implementing functionality to provide processing of a transaction, as specified in the independent claims. This is achieved by a combination of features recited in each independent claim. Accordingly, dependent claims prescribe further detailed implementations of the present invention.

More particularly, in accordance with one aspect of the present invention, there is provided a messaging system for processing messages transmitted between terminals through a data communications network, the messages each comprising transmission information identifying a receiving party of the message, and a message body at least partly specified by a sending party, the messaging system comprising:
data storage means arranged to store:
   a plurality of predetermined character strings;
   auxiliary content corresponding to the predetermined character strings, including first auxiliary content corresponding to a first of said plurality of predetermined character strings and second auxiliary content, different to the first auxiliary content, corresponding to said first of said plurality of predetermined character string; and
   characteristic information relating to messaging parties, the characteristic information comprising profile information; and
an interface arranged to receive said messages,
wherein, responsive to receipt of a said message, the messaging system is arranged to:
   identify one of said predetermined character strings contained in a message body of the message;
   identify a receiving party of the message on the basis of the transmission information;
   select auxiliary content corresponding to the identified predetermined character string, wherein, in the case that the identified predetermined character string comprises said first predetermined character string, characteristic information relating to the identified receiving party is identified from the storage means and auxiliary content is selected from said first auxiliary content and said second auxiliary content on the basis of profile information from the identified characteristic information;
   modify the received message to include data which results in the identified predetermined character string being replaced by the selected auxiliary content when the message is accessed on a terminal; and
   send the modified messages to a terminal associated with the identified receiving party.
   In accordance with a further aspect of the present invention, there is provided a method of processing a message sent between terminals in a telecommunications network, the telecommunications network comprising data storage means arranged to store characteristic data relating to messaging parties, the characteristic information comprising profile information, the messaging parties including a sending party and a receiving party, the data storage means being further arranged to store predetermined character strings and auxiliary content corresponding to the predetermined character strings, the method comprising:
   receiving a message comprising transmission information identifying a receiving party of the message, and a message body at least partly specified by a sending party of the message, the message body comprising one of said predetermined character strings;
   in response to receiving the message, identifying, on the basis of the transmission information, a receiving party of the message and identifying said one of said predetermined character strings;
   determining one or more sets of auxiliary content corresponding to the identified predetermined character string; and,
   in the case that it is determined that there are a plurality of sets of auxiliary content associated with the identified predetermined character string:
      accessing, from the data storage means, characteristic data associated with the identified receiving party;
      selecting a set of auxiliary content from the determined plurality of sets of auxiliary content on the basis of profile information from the accessed characteristic data;
      modifying the message to include data such that the identified predetermined character string is replaced by the selected set of auxiliary content when rendered on a terminal; and
      sending the message to a terminal associated with the identified receiving party.

Thus, the present invention enables auxiliary content to be automatically added to messages in dependence on a recipient of the message; this provides a convenient and labour-saving means for tailoring the content of messages according to the recipient. The prior art, as comprised in EP-A-1 583 302, did not provide for this.

### Brief Description of the Drawings

Various embodiments are described herein, by way of example only, with reference to the accompanying drawings. With specific reference now to the drawings, it should be understood that the particulars shown are by way of example and for purposes of discussion of illustrated embodiments only, and are presented in order to provide what is believed to be a useful and readily understood description of the principles and concepts of the invention. In this regard, no attempt is made to show structural details of the invention in more detail than is necessary for a fundamental understanding of the invention, the description taken with the drawings making apparent to those skilled in the art how the several forms of the invention may be embodied in practice.

Accordingly, a more complete understanding of the present invention and the utility thereof may be acquired by referring to the following description in consideration of the accompanying drawings, in which like reference numbers indicate like features, and wherein:
Figure 1 illustrates an environment wherein embodiments of the invention may be utilized.
Figure 2 illustrates additional details included in operator system components provided in accordance with at least one embodiment of the invention.
Figure 3 illustrates additional details included in a Messaging Processing System provided in accordance with at least one embodiment of the invention.
Figure 4 illustrates an example of operations performed in conjunction with message flow processing performed in accordance with at least one embodiment of the invention.
Figure 5 illustrates another example of operations performed in conjunction with the flow of messages performed at least one embodiment of the invention.

### Detailed Description of the Invention

In the following description of various invention embodiments, reference is made to the accompanying drawings, which form a part hereof, and in which is shown, by way of illustration, various embodiments in which the invention may be practiced.

Moreover, it should be understood that various connections are set forth between elements in the following description; however, these connections in general, and, unless otherwise specified, may be either direct or indirect, either permanent or transitory, and either dedicated or shared, and that this specification is not intended to be limiting in this respect.

Embodiments of the present invention may be implemented using SMS, MMS, e-mail or another form of electronic messaging. Conveniently, picture messaging may be used; picture messaging refers to the sending of an image, e.g., a photograph produced by a mobile phone, to another mobile phone or to a server or electronic-mail account. Conventionally, the images are sent in some predetermined picture format, e.g., Joint Picture Expert Group (JPEG). In addition to pictures, MMS messages might compose of video, audio, hypertext, links, etc.

In accordance with at least one embodiment of the present invention, a character string is replaced by auxiliary content in a message body of a message sent between messaging parties; the auxiliary content may vary according to a receiving party of the message. It should be understood that the term "auxiliary content" may include various types of content including any one of or combination of text, pictures, audio, video, links to web-sites or other locations of information, telephone numbers, electronic mail addresses, downloadable files including but not limited to audio files including ring tones, songs, etc, computer implemented games, video files, formatting data for messages, color of the text, font size of the text, sound to be embedded in the text, animation to be embedded in the text, picture embedded in the message, data enabling the display of what is termed "wallpaper," i.e., an image used as a background on a computer screen, etc.

As is conventionally understood in the art, the SMS specification (TS 23040), section 3.10 (Enhanced Messaging Service) relates to incorporation of pictures in messages. Current cellular handsets already provide the technology to implement the functionality covered by that specification section. Thus, in accordance with at least one embodiment of the invention, the auxiliary content may include graphical images such as emoticons.

A description of the architecture and operation of various invention embodiments is now provided.

A first arrangement includes equipment configured to perform insertion of auxiliary content including, for example, at least one emoticon or audio file in a message sent from a sending party to at least one receiving party through at least one communication network. The equipment is configured to analyze the message content and identify one or more character strings predefined to correspond to an instruction to insert an auxiliary content of a predetermined particular type and to graphically enhance the message content to replace the one or more character strings with the auxiliary content (e.g., an emoticon) of the corresponding predetermined particular type prior to the message being delivered to the receiving party.

The sending party and the receiving party (which may be collectively referred to as "messaging parties") may be users associated with terminals capable of sending and/or receiving messages. In some embodiments, the sending party comprises an information source, for example a system for sending messages as part of an advertising campaign, or a news service.

Translation of character strings in messages sent by a sending party to graphical items may be performed according to one or more mapping criteria. Based on such text mappings, a string of text characters may be mapped to a matching symbol, e.g., emoticon. Thus when a sending party composes a message, they may insert the string of characters into a message and send the message through the network to a receiving party designated by the user. Thus, when the message is received, if the character string appears in the body of the message, the character string is replaced with a matching symbol. The replacement of such character strings with graphical items produces a graphically enhanced message body. Subsequently, the graphically enhanced message may be forwarded to the designated receiving party. Therefore, in accordance with at least one embodiment of the invention, messaging parties may be registered with a service that provides the ability to replace character strings with corresponding graphical items, e.g., emoticons.

Character string mappings may be stored in a data storage means such as a database located at or accessible by the MPS; e.g., network operator components, for example, at a SMS Center (SMSC) of a cellular telephone system or in equipment operationally coupled to such operator components. Thus, such equipment may be configured to incorporate auxiliary content in a message when that message is analyzed to identify strings of characters mapped to auxiliary content. As a result, prior to delivery of the message to the intended receiving party(s) the message may be modified by the equipment to include the auxiliary content, e.g., one or more emoticons.

The character string mappings stored in or accessible by equipment designed in accordance with the invention may represent an instruction to insert auxiliary content, e.g., an emoticon of a particular type, in a message. Thus, when a user composes a message, the user may insert the character string into the body of the message and send the message. Subsequently, when the message reaches, for example, the SMSC, the text is analyzed to determine the presence of character strings included in the database and representing an instruction to insert one or more types of auxiliary content.

As a result, one or more databases of character string mappings may be referenced and analyzed as well as instructions to perform enhancement of the message by replacing the character strings with auxiliary content. As part of that analysis and replacement, a general translation table may be referenced to determine what type of auxiliary content is to be inserted. For example, the character string :) may correspond to a smiley face type emoticon. Subsequently, or simultaneously, a database is accessed which indicates auxiliary content to be input when a smiley face type icon is requested. For example, such auxiliary content may be, e.g., a Shrek smiley face or a Mickey Mouse smiley face. Accordingly, as a result of these operations, the character string(s) in the message are replaced with the auxiliary content based on the character string(s) indicating the type of auxiliary content to be inserted in the message. Subsequently, a message bearing the graphically enhanced text is transmitted to the recipient designated by the user in the message sent by the user.

Further, as is described in detail below, in some cases there may be more than one set of auxiliary content associated with a given string; in such cases, the auxiliary content may be selected on the basis of characteristic information of a receiving party of the message, such as profile information, information concerning the capabilities of a terminal of the receiving party, or a preference of a receiving party or other party for receiving specific types of auxiliary content, for example.

Thus, in accordance with at least one embodiment of the invention, methods, systems and software for supporting or implementing functionality to enable insertion of auxiliary content into message content of a message sent by a user of a communication network at least partly in dependence on one or more recipients of the message, wherein the auxiliary content includes at least one of a graphical icon or audio file specified by an information provider.

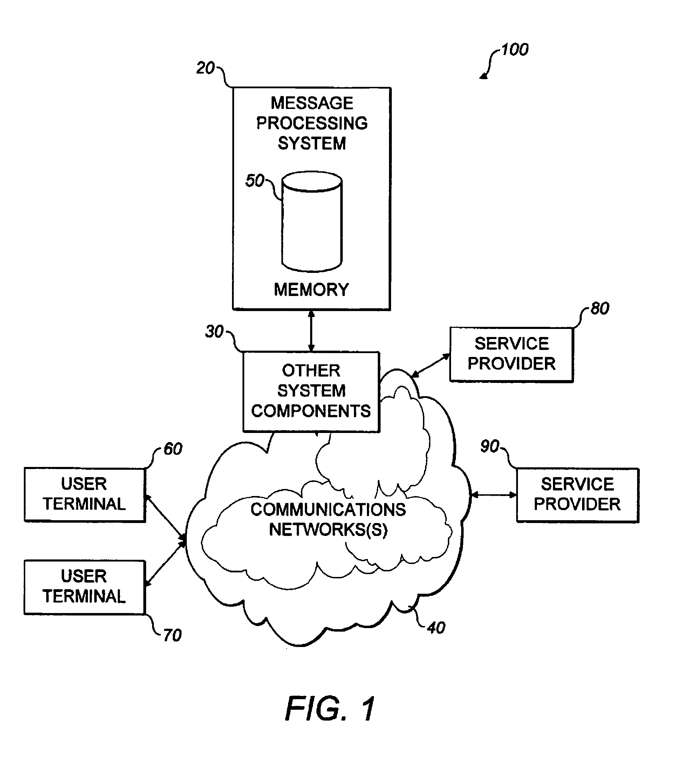

Figure 1 illustrates an environment 100 wherein embodiments of the invention may be utilized to provide enhanced messages including auxiliary content to at least one of a plurality of user terminals 60, 70 via one or more communication networks 40, including, for example, a plurality of different types of networks such as cellular networks, PSTN, the Internet, private data networks, etc.

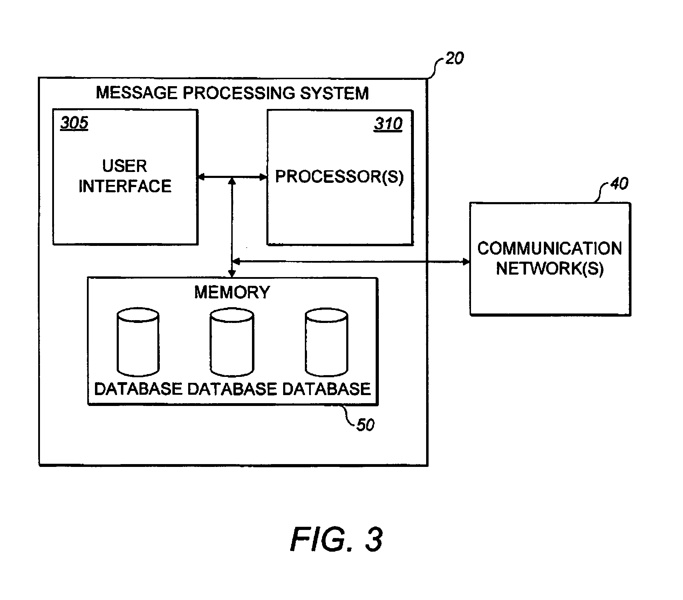

As illustrated in Figure 1, a Message Processing System (MPS) 20 (also illustrated in further detail in Figure 3) manages and controls distribution of auxiliary content in messages sent via a communications network 40. The MPS may be implemented as a function of an internet server, or messaging centre such as an SMS centre, for example, or it may be implemented as a proxy system to which messages are routed in order to insert auxiliary content. In the latter case, sending terminals may be configured to send messages to the proxy system.

The MPS 20 may also store one or more sets of rules governing and related to the delivery of auxiliary content to a plurality of users (via user terminals 60, 70).

As part of such a campaign, auxiliary content may be distributed to the one or more of the plurality of user terminals 60, 70, which may be, for example, mobile devices or other devices capable of sending and receiving messages and outputting such messages to the device users (including devices that are not considered "mobile" in nature). For example, a consumer may subscribe to a service in which some or all of the SMS/MMS messages sent to the consumer are rerouted to the consumer's e-mail address.

It should be understood that each of the user terminals 60, 70 can be implemented as a mobile phone, lap top, PDA, multimedia computer, smart phone, etc. Accordingly, although not illustrated, it should be understood that a user terminal 60, 70 may include a processor connected to a user interface, data storage means such as a computer readable memory, and a display and/or other output device. The user terminal 60, 70 may also include a battery, speaker and at least one antenna. The user interface may further include a keypad, touch screen, voice interface, one or more arrow keys, joy-stick, data glove, mouse, roller ball, touch screen or the like.

In addition to providing communication between the terminals 60, 70, the communication network(s) 40 may also enable communication with one or more service providers 80, 90. Such services 80, 90 may provide, for example, services that the consumer and advertisers can access that may be any Web or WAP services, including but not limited to, entertainment services, news services, auction services, on line shopping services, chatting services, communication services etc.

Thus, terminals 60, 70 can be connected to communication network(s) 40 via wireless or wired communication link.

Accordingly, computer executable instructions and data used by a processor included in a user terminal 60, 70 and other components within a mobile device may be stored in the computer readable memory included in the user terminal 60, 70. Further, the memory may be implemented with any combination of read only memory modules or random access memory modules, optionally including both volatile and non-volatile memory. Further, software may be stored within the memory and/or storage to provide instructions to the user terminal's processor for enabling the mobile device to perform various functions. Alternatively, some or all of the device computer executable instructions may be embodied in hardware or firmware (not illustrated).

The terminals may have capability to communicate using one or more different types of communication networks and have messaging capabilities including, e.g., a SMS client, electronic mail client or MMS client embedded in the terminal. Terminals 60, 70 may also include a browser (not shown) configured to access Web and/or WAP services.

Although, as explained above, auxiliary content may include for example, emoticons and/or audio files, it should be appreciated that auxiliary content may also include information in the form of data, text, pictures, audio, video, HyperText Markup Language (HTML), eXtensible Markup Language (XML), eXtensible HyperText Markup Language (XHTML). The MPS 20 may also store instructions and/or rules indicating what, when and how to send auxiliary content including promotional content, details regarding which users should receive auxiliary content (e.g., characteristics of device users included in a target group or groups for the campaign), in which format (e.g., SMS, IM, electronic mail, MMS, WAP Push, Web pages, digital object, etc.), and so on.

The one or more communication networks 40 may include any type of communications network including but not limited to a second Generation (2G) network, a 2.5 Generation network, a third Generation (3G) network utilizing GSM, Wideband Code Division Multiplex Access (WCDMA), CDMA, or Time Division Multiplex Access (TDMA), GPRS, Universal Mobile Telephone System (UMTS), etc. Network(s) 40 can also be implemented as a combination of two or more technologies i.e., a hybrid network. Further, communication network(s) 40 may also include generic Internet access using one or more transport methods.

Further, the one or more communication networks 40 may also include Local Area Networks (LANs), such as Wireless Local Area Networks (WLAN), BlueTooth (BT) and optionally utilize one or more other technologies, such as WiMax (WorldwideInteroperability for Microwave Access). Further, communication via the one or more communication networks 40 may be implemented by broadcasting over cellular, broadcasting over DVB-H (Digital Video Broadcasting - Handhelds), ISDB-T (Terrestrial Integrated Services Digital Broadcasting) or DMB (Digital Multimedia Broadcasting).

The one or more communication networks 40 can also include any other type of network of interconnected devices or device networks, e.g., interconnected computers or computer networks. Accordingly, it should be understood that the one or more communication networks 40 can also be a combination of a plurality of different types of networks forming one or more hybrid networks.

Although not shown, the communication network(s) 40 may also include one or more network elements, e.g., Home Location Registers (HLRs), call detail records, SMS centers, MMS centers, WAP gateways, etc. Additionally, the communication network(s) 40 may include or be implemented to communicate with various additional components, e.g., a billing system, base stations and other elements, interfaces and functions conventionally understood to be of use in the operation and provision of a communication network(s). Further, the one or more communication networks 40 may further include one or more base stations or wireless communications station (not shown) installed at fixed locations and used to communicate as part of either a push-to-talk two-way radio system or a wireless telephone system, for example, cellular, WCDMA, CDMA or GSM.

As mentioned above, user terminals 60, 70 (which may be mobile terminals) may be coupled to or utilize communication network(s) 40, which may be implemented as one or more communication networks and further may be implemented as one or more mobile networks. Therefore, in accordance with at least one embodiment of the invention, the communication network(s) 40 may be connected via a Base Transceiver Station (BTS) to a Radio Access Network (RAN) included in the one or more communication networks 40. Such a RAN network may include, for example, several BTSs and Base Station Controllers (BTCs); further, such a RAN may be implemented via connection to operator system components 30 located at one or more facilities associated with or controlled by an operator, such as a level operator and/or network provider that incorporates or is connected to or coupled to various network elements.

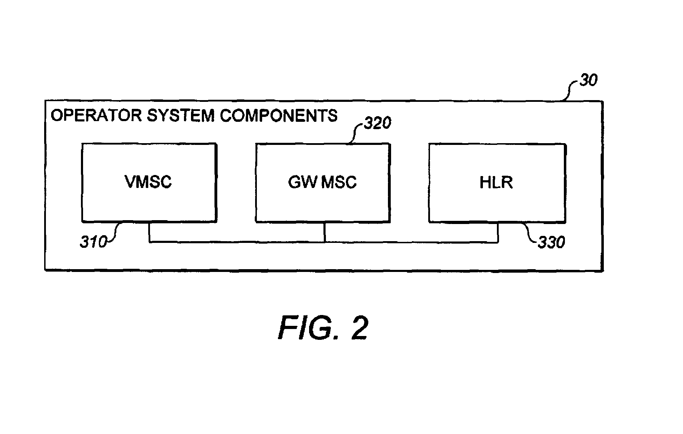

For example, as illustrated in Figure 2, such operator system components 30 may include or be implemented in, for example, a Visiting Mobile Switch Center (VMSC) 310, Gateway Mobile Switch Center (GWMSC) 320, and/or Home Location Register (HLR) 330. Thus, it should be understood that some or all of the functionality provided by the operator system components 30 may be provided by various types of network switching subsystem components, which may be one or more components of a GSM system that carries out switching functions and manages the communications between mobile phones and the PSTN. Accordingly, the components 30 may be owned and deployed by one or more mobile phone operators and allow mobile phones to communicate with each other and telephones in a wider telecommunications network. The architecture of such network switching subsystem components resembles a telephone exchange, but there are additional functions which are needed because the phones are not fixed in one location.

Each of these functions handles different aspects of conventionally understood mobility management. Such network switching subsystem components also include what is conventionally known to be the GSM core network, which may include a circuit-switched core network, used for traditional GSM services such as voice calls, SMS, and Circuit Switched Data calls as well as an overlay architecture on the GSM core network to provide packet-switched data services, which allows mobile phones to have access to services such as WAP, MMS, and Internet access. Thus, it should be understood that some or all of the components 30 may be provided in any type of such network switching subsystem components regardless of ownership or operation.

As mentioned above, in accordance with at least one embodiment of the invention, auxiliary content may be added to a message in a server or network node via which the message is routed. For example, for SMS messages there could be an intermediate network node or the functionality could in integrated to for example Short Message Service Center (SMSC) node or similar components that would analyze SMS messages based on for example, content, originator and/or recipient. Such equipment could then modify sent messages to include for example user data header (TP-UDH, see 3GPP TS 23.040 V7.00 (2007-03) specification for Enhanced Messaging Service) to SMS message structure. This would enable inclusion of binary data in a normal SMS message prior to the message body itself. In such an implementation and others, this functionality for including this auxiliary content could define (according to the 3GPP standard), for example, formatting of text in the SMS message, color of the text, font size of the text, sound to be embedded in the text, animation to be embedded in the text, picture embedded in the message, etc. (see Chapter 9.2.3.25.10.1.1 of TS23.040 V7.00 (2007-03) for more details).

Thus, it should also be appreciated that, in accordance with at least one embodiment of the invention, auxiliary content may be added to a message in, for example, the operator components 30 illustrated in Figure 1 or the like.

Figure 3 illustrates one example of the components of the MPS 20 in more detail. Preferences, settings, and auxiliary content and/or other rules of distributing auxiliary/promotional content may be stored in a data storage means such as a memory 50.

As mentioned above, the MPS 20 in combination with the operator components 30 may be configured to access, manage and/or store data used in the management and delivery of auxiliary content to one or more user terminals 60, 70. Thus, the operator components 30 may include, for example, one or more databases including user records and data indicating relationship history such as orders, offers, and customer information, e.g., IP addresses, customer phone numbers, addresses, etc. Such service databases may be maintained for storing service specific parameters; for example, services provided to user terminals 60, 70 or store user information, for example, in connection with or as part of providing one or more services.

As illustrated in Figure 3, the MPS 20 may include one or more processors 310 operationally coupled to a user interface 305, and data storage means such as a computer readable memory 50. Accordingly, computer executable instructions and data used by the processor(s) 220 and other components within the MPS 20 may be stored in the computer readable memory 50 included the MPS 20. Further, software may be stored within the memory 50 (coupled to the processor(s) 310 and user interface 305) to provide instructions to the MPS components for enabling the system 20 to perform various functions.

For example, the MPS 20 may be configured to receive auxiliary content (e.g., audio, video, text, graphics, font type, font color, etc.) and format of the content (e.g., MMS, EMS, SMS, WAP push, etc.) as well as other details regarding distribution of such content via the user interface 305. Subsequently, that information may be stored in one or more databases included in the computer readable memory 50. Accordingly, the user interface 305 may be configured to enable interaction with components of the MPS 20 as well as other systems coupled to the system 20 to manage and control distribution of auxiliary content and analysis of responses thereto as part of one or more marketing, advertising or customer relations campaigns. Accordingly, the user interface 305 may be implemented as a web-based user interface provided by software stored in the memory 50 or running on one or more servers associated with or supporting the MPS 20.

The memory 50 may include one or more databases configured to store an archive of content previously sent to a plurality of users and their respective responses to such content as well as the type of promotional content, rules for selecting content for distribution content, etc. Additionally, the memory 50 may also include one or more databases for storing actual content and related distribution parameters for use in distributing the auxiliary content.

It should be understood that memory 50 may include many databases that separately include, for example, characteristic information such as user profile information, information regarding the capabilities of user terminals associated with users of the service, or other information which may be used in determining auxiliary content to be sent to users; additionally, or alternatively, archive data, etc. or some combination or all of this information and data may be included in a single database. Thus, returning to Figure 1, it should be appreciated that some or all of the functionality of the operator components 30 and the MPS 20 may be implemented together or separately and/or remotely in any number of variations so as to provide the ability to enable enhancement of messages to include advertiser/information provider dictated promotional content based on character strings included in the message formulated by the sending party.

In accordance with at least one embodiment of the invention, the MPS 20 may be configured to operate as a mechanism for receiving auxiliary content and instructions on distributing content to messaging parties, whereas operator system components may be configured or reconfigured to interact with the MPS 20 to receive such content and manage the delivery of such content in messages sent from and to users 60, 70.

The MPS 20 can be operationally coupled to the communication network(s) 40 via the operator system components 30. The MPS 20 may include or have access to a memory 50 which may include mapping data indicating the correlation between various character strings and auxiliary content to be included in a message including such character strings. For example, where the auxiliary content includes emoticons, the memory may comprise mappings between strings and auxiliary content as illustrated in Table 2:

**TABLE 2**

| # | String | Symbol 1 | Symbol 2 |
|---|---|---|---|
| 1 | :) | 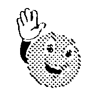 | 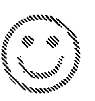 |
| 2 | :( | 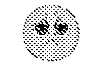 | 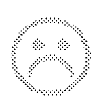 |
| ... | ... | ··· | |
| 29 | ;) | 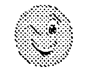 | 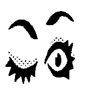 |
| 30 | (G1) | 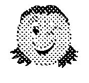 | 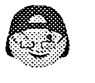 |
| 31 | (G2) | 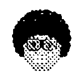 | ··· |
| 32 | (G3) | 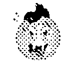 | ··· |
| ... | ... | ··· | ··· |
| 49 | (GN) | 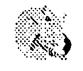 | |
| 50 | (B1) | 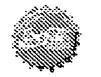 | 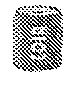 |
| 51 | (B2) | 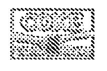 | ··· |
| 53 | (B3) | 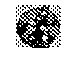 | 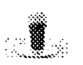 |
| ... | ... | ··· | |
| 69 | (BN) | 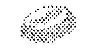 | ...··· |

In the example of Table 2, each character string listed corresponds to one or two symbols; in some embodiments of the present invention, character strings may correspond to more than two symbols. Further, although all the auxiliary content listed in Table 2 comprises a graphical symbol, in some embodiments, character strings correspond to other types of auxiliary content, such as listed audio or video files, links to websites etc.

Accordingly, in accordance with at least one embodiment of the invention, the MPS 20 may support or provide one or more web interfaces that provide some service hosting such one or more members of a community or other party that has formed in association with a particular interest area may configure or reconfigure mappings of character strings to auxiliary content, e.g., edit mapping such that emoticons or other icons or symbols change periodically or over time.

It should be appreciated that, although the character string mappings have been described as instructions for including emoticons or audio files, it should be understood that the character string mappings may be specific to any type of data, including for example, representations of a products of a information provider or advertiser associated with the message, e.g., a Coke™ bottle symbol if Coke™ is an advertiser/information provider associated with one or more messaging parties, or it could be for example Pepsi™ symbol if the advertiser/information provider is Pepsi.

Moreover, it should be understood that the selection of auxiliary content, e.g., a product icon, to be inserted in the message could be based on the character string included in the original message, and characteristic information regarding the sending and/or receiving party, for example a specific instruction to insert a Shrek smiley face for a given receiving party, or profile information relating to the messaging parties, such as interests in certain products and/or activities, age, gender, occupation and so on.

Further, in accordance with at least one embodiment of the invention, it should be understood that the auxiliary content could be served from a centralized database rather than being served on a one-time basis prior to delivery of the message to the recipient. Thus, when the original message is analyzed, instead of replacing a character string with auxiliary content, the character string may be replaced with retrieval information which results in auxiliary content being provided to a receiving party after receipt of the message. The retrieval information may include a network address of a server from which auxiliary content can be retrieved; the retrieval information may result in the auxiliary content being supplied to the receiving party at regular intervals, or on demand each time the message is accessed, for example. This is explained in more detail below.

Such an implementation may be particularly useful in that an archived message may provide an opportunity to serve additional or different auxiliary content from such a centralized database whenever the archived message is viewed, thereby providing additional message modification opportunities. Therefore, auxiliary content could be retrieved from one or more databases every time a communication message is viewed by a user, enabling modification of the communication to have continuity. Further utility may be provided because auxiliary content may vary with time. For example, an information provider of the message could be replaced by a different information provider after some period of time, resulting in a change of auxiliary content associated with the information provider, or the type of content may be altered (e.g., a product graphic may be replaced with an interactive coupon for product or services).

Accordingly, databases used in conjunction with the incorporation of auxiliary content in communication messages may include a number of variables set by an MPS provider e.g., data indicating expiration of use of a particular symbol, name of a group and/or identifiers of user terminals in a particular group or community and auxiliary content of interest to them, etc.

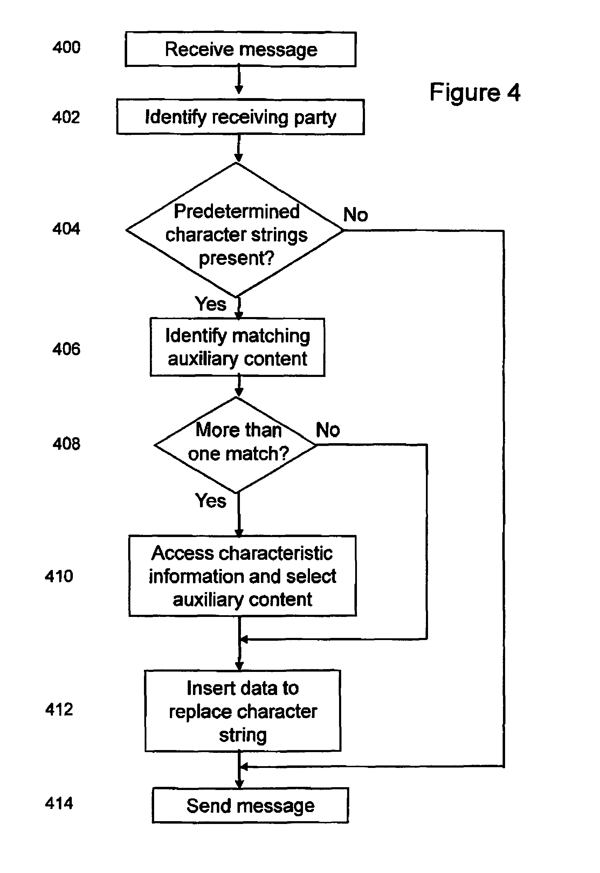

Figure 4 illustrates one example of operations performed by an MPS processing messages being transmitted from a sending party to a receiving party in accordance with an embodiment of the present invention. At step 400, a message is received at the MPS 20 from a sending party. The message typically has a message body at least partly specified by the sending party, which typically includes the text of the message, and transmission information such as an email address or telephone number for identifying a receiving party of the message; in some cases the transmission information also identifies a sending party of the message.

At step 402 the MPS identifies a receiving party of the message using the transmission information. At step 404, the message body is analyzed to identify whether the message body includes any character strings to be replaced by auxiliary content; this may comprise accessing the memory 50 and comparing with one or more databases of character strings to identify whether the message includes one or more character strings mapped to instructions to include auxiliary content. If no such character strings are determined to be present, the process proceeds to step 414, where the message is transmitted to a receiving party identified by the transmission information.

If, however, one or more such character strings are found to be present, the MPS 20 proceeds to step 406, where auxiliary content corresponding to the identified string(s) is identified. At step 408, for each character string identified, it is determined whether there is more than one set of corresponding auxiliary content. If more than one match is found, characteristic information of a receiving party identified at step 404 is accessed from the memory 50, and this information used to select one of the sets of auxiliary content at step 410. This selection is described in more detail below. In some embodiments, characteristic information relating to a sending party is also used in selecting auxiliary data.

At step 412, the message is modified to include data which results in a character string identified at step 404 having been replaced by the selected auxiliary content on a user terminal. This data will be described in more detail below. The MPS 20 sends the message at step 414.

In some embodiments, the selection performed at step 410 is based on a type of user terminal associated with the receiving party; for a given character string, some sets of corresponding auxiliary content may be associated with a greater amount of data than others, in which case it may be advantageous to select content associated with low amounts of data for terminals having low data storage capacity, for example. Further, in some cases one or more sets of auxiliary content may be of a type not compatible with some types of user terminals; it is therefore advantageous to select auxiliary content in accordance with capabilities of a receiving terminal. For example, some terminals (for example, some models of mobile telephone) are not capable of rendering video files; therefore, when a given character string is determined to correspond to first auxiliary content comprising a video file and second auxiliary content comprising a graphical symbol, it may be advantageous to select the video file only for terminals capable of rendering the file.

In some embodiments, the characteristic information on which the selection is based may include preferences of a messaging party. In Table 2, for example, the character string ":)" corresponds to two "smiley face" symbols; the identified receiving party may have indicated a preference for receiving symbol 2 over symbol 1. Additionally, or alternatively, the identified receiving party may have indicated a preference for receiving certain types of files, for example video files, or files associated with a low amount of data.

Accordingly, in some embodiments the characteristic information is conveniently defined within profile information relating to a messaging party. For example, a user's profile information may indicate that they like Shrek; based on this, the MPS 20 may therefore select emoticons including a Shrek face when available. In some embodiments, the auxiliary content includes advertising content, and the profile information is used to select such content to more effectively modify messages.

The characteristic information may comprise information indicating whether messaging parties are members of predefined groups. The groups may be defined by, for example, the interests of the members of the groups or services to which the members of the group subscribe. For example, users may subscribe to a service to receive certain types of auxiliary content; the characteristic information may comprise authentication information indicating whether or not a given messaging party is a subscriber to the service, or is otherwise authorised to receive such content.

In embodiments of the present invention described in relation to Figure 4, the data included in the message at step 412 comprises data which can be rendered into the selected auxiliary content by a receiving terminal such as a picture file or MP3 audio file. In some embodiments, data is inserted into a message which results in a receiving terminal obtaining the auxiliary content from the MSP 20, or other source, subsequently to receiving the message, for example when the message is accessed by a user and/or at predetermined intervals; as described above, such data is herein referred to as "retrieval information". The retrieval information may comprise data which is readable by an application of the receiving terminal, for example instructions for the application to contact the MSP 20 at given intervals, or at specific times, to retrieve up-to-date information regarding the auxiliary content. In some embodiments, in particular where the message comprises an e-mail message, the retrieval information may comprise an executable script, which causes the terminal to contact the MSP 20 each time the message is opened. In some embodiments, the MSP 20 may send updated auxiliary content to the terminal without being prompted to do so by the terminal.

Using retrieval information has the advantage that the auxiliary content can be updated, for example if the user's preferences change. For example, in the case of a user who has indicated a preference for Coca-Cola at the point of initially receiving a message referring to drinks may contain a symbol representing a Coca-Cola bottle. If the user later changes his preferences to prefer water, subsequently accessing the message may result in the symbol of a Coca-Cola bottle being replaced by a glass of water. Additionally, or alternatively, the auxiliary content may be updated without a change of user preference. In some embodiments, the auxiliary content may be updated by a party associated with the auxiliary content; for example, Coca-Cola may specify a different design for the symbol representing a Coca-Cola bottle. In some embodiments, content may change with time, for example auxiliary content associated with a particular sporting event could be used for the duration of that event, but change once the event has finished.

Further if a message containing the data added at step 412 is forwarded by the initial receiving party to further party, the characteristic information associated with the further party may be different to those associated with the initial receiving party. By using retrieval information, the selection at step 410 can be performed for the further party, resulting in auxiliary content appropriate for the further party.

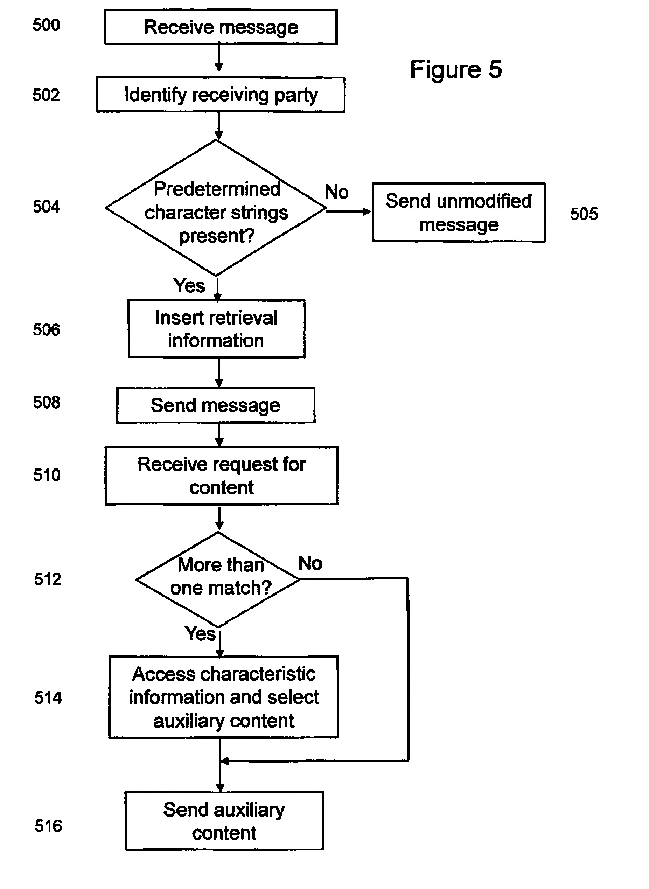

Figure 5 illustrates an example of operations performed in conjunction with processing of messages for transmission from a sending party to a receiving party in embodiments of the present invention in which retrieval information is used. The MPS 20 receives a message at step 500, and identifies a receiving party of the message at step 502. At step 504, the message content is analyzed and compared with one or more databases of character strings in the memory 50 to identify whether the message includes one or more character strings mapped to instructions to include auxiliary content. If the message does not include any such character strings, the MPS 20 proceeds to step 505 at which the message is sent to the identified receiving party without being modified.

If, however, the message does include such character strings, the MPS 20 then proceeds to step 506, at which the character strings are replaced with retrieval information, enabling the serving of auxiliary content from a server to produce an enhanced message that includes auxiliary content that may be dynamically served (e.g., it may change at the discretion of operating rules in the server); the message including the retrieval information is then sent to the identified receiving party at step 506.

Subsequently (and possibly some time later), the MPS 20 receives a request for auxiliary content from a user terminal, which may be the same user terminal to which the message containing the retrieval information was sent at step 506, or a different terminal, perhaps as a result of the original recipient forwarding the message to the different terminal. The MPS then proceeds to step 512, at which it determines whether there is more than one set of auxiliary content corresponding to a predetermined character string identified at step 504 stored in the memory 50. If there is only one set of auxiliary content corresponding to the identified character string, this content is sent to the requesting terminal at step 516; if there is more than one set of auxiliary content corresponding to the identified character string, the MPS accesses characteristic information for a receiving party associated with the requesting terminal at step 514, and selects auxiliary content on the basis of this characteristic information, as described above. The selected auxiliary content is then sent at step 516. Steps 512 and 514 in Figure 5 correspond to steps 408 and 410 in Figure 4.

It should be appreciated that, in accordance with at least one embodiment of the invention, an icon or graphic may be attached to a message, wherein the icon or graphic includes meta data defining various information, e.g., validity period, i.e., expiration time, of the icon or graphic being viewable in the message. As a result, a network element may check and receive a new icon or other auxiliary content to be included in the message from a database of auxiliary content following expiration of the current icon or graphic.

In some embodiments, the MPS 20 may broadcast updates to user terminals, such that the auxiliary content displayed is altered when the message is accessed.

Alternatively or additionally, the analysis of the meta data may be performed in a recipient terminal in such a way that the meta-data is also transferred to the terminal and when the message is read (accessed) at the recipient terminal, the terminal checks if the icon should be still used or if a new one should be ordered/received from a database (e.g. from network element or directly from the database).

Additionally, it is possible that, in accordance with at least one embodiment, a terminal may have access to a library of icons in its database/memory and these icons may include similar meta data. As a result, in accordance with at least one embodiment of the invention, a recipient terminal may be configured to check when a new message is received whether an icon should still be used or if a new one should be requested.

In connection with the operations performed in conjunction with Figure 5, it should be appreciated that, due to the nature of messaging, messages may be forwarded from an initial recipient to someone else by the initial recipient. As a result, auxiliary retrieval information requests may be received from someone other than the originally designated recipient to the message. As a result, it should be appreciated that the serving of auxiliary content to such secondary recipients may be permitted (i.e. authorised) or prohibited in various manners, e.g., serving of auxiliary content is permitted if secondary recipient is in a designated community of user terminals, etc. Alternatively, if auxiliary content is group specific, such serving of auxiliary content may be prohibited if a user terminal sending the call request is not the original recipient of the message or included in a community or group of user terminals permitted to receive the content.

In an alternative implementation to those described above and in relation, specifically to electronic mail, Multipurpose Internet Mail Extensions (MIME) multipart format may be used where the electronic mail is basically composed of HTML code. As a result, the inserted auxiliary content may refer to one or more URL addresses to retrieve the auxiliary content. For example, HTML code such as [img]http://www.information provideringmail.com/campaing007/current.gif[/img] may be embedded in some parts of the outgoing electronic mail and auxiliary content may be obtained from the URL from either an intermediate server/network node or a software application in a recipient's terminal.

It should be understood that implementation of the method and system of the present invention involves performing or completing certain selected tasks or steps manually, automatically, or a combination thereof. Moreover, according to actual instrumentation and equipment of various embodiments of the method and system of the present invention, several selected operations could be implemented by hardware or by software on any operating system of any firmware or a combination thereof. For example, as hardware, selected functionality of the invention could be implemented as a chip or a circuit. As software, selected steps of the invention could be implemented as a plurality of software instructions being executed by a computer using any suitable operating system. In any case, selected operations of the method and system of the invention could be described as being performed by a data processor, such as a computing platform for executing a plurality of instructions.

In accordance with at least one embodiment of the invention, auxiliary content (e.g., including symbols such as emoticons, html code, audio files, etc.) may be selected for inclusion into message content based both on character strings included in message content as well as data included in other messages included in a "communication session" involving either the originator or recipient of the message. The term "communication session" should be construed to include but is not limited to one or more communication messages being exchanged between a plurality of users or a user and a service provider co-referring to at least one particular topic. Thus, a communication session may occur between a plurality of users or a user and a recipient or originator of information, e.g., a content service provider on the Internet. Thus, depending on content of previously exchanged messages, auxiliary content may be selected for inclusion in a current or subsequent message(s). For example, a text message including a happy face character string, e.g., :), may include a happy face that looks like a popular animated movie character, e.g., Shrek, if a previous text message made reference to Shrek.

Additionally, a history of auxiliary content transmitted to a particular user may be stored and archived (e.g., in memory 50 of MPS 20 illustrated in Figure 3). As a result, an understanding of interests of a particular user could be gained and used to enhance relevance of promotional content transmitted to the user (e.g., archived content indicates that a user is interested in horror movies, is interested in foreign films, is interested in music concerts, etc.) Further, analysis of auxiliary content to be transmitted may be performed in whole or part using special application software running in a user terminal.

Additionally, as explained above, in accordance with at least one embodiment of the invention, costs for services including sending electronic mail or text messages may be free or subsidized based on user interaction with distributed auxiliary content (for example to reduce costs to the advertiser). Such services may also include one or more voice services (i.e., making and receiving phone calls), messaging services such as SMS, MMS, using data services such as Internet browsing or WAP browsing, making video calls, downloading content, streaming content, purchasing applications such as games or other software, using location services, finding information, communicating with a group of people (e.g., multicast communication), etc.

Moreover, although not specifically illustrated or discussed above, one or more of the above-described components (e.g., MPS 20 illustrated in Figures 1 and 2) or additional elements may be included in the communication network 40 that operate or cooperate to identify a correlation between the accessing of a particular content service or mobile terminal and the transmission of auxiliary content including a hyperlink. In such an implementation, a "click-thru" type of billing model for distributing auxiliary content would, therefore, be feasible. Additionally, such an implementation may also enable a business or pricing model wherein, services provided via one or more networks may be provided to a user at a reduced, free or subsidized rate. Thus, at least one invention embodiment may be implemented to provide subsidized or free communication and/or data services to users wherein an advertiser acts as a information provider for transmission of one or more messages and/or communication sessions.

In accordance with at least one embodiment of the invention, character strings in message can be interpreted by a client software application in the receiving terminal to display a symbol corresponding to the character string included in the message. Likewise, in accordance with at least one implementation of at least one embodiment, the client software application that analyzes messages to identify character strings and map corresponding auxiliary content into a message may be included in an originator's terminal and perform translation prior to transmission of the message to the recipient. Thus, it should be understood that, in accordance with at least one embodiment, an originator of a message may include, for example, a graphic, icon or even a single text character which may be modified/changed according to the invention either by a network element or at receiving terminal.

As a further alternative, and explained above, in accordance with at least one other implementation of at least one embodiment, messages may be sent through an intermediate server or equipment, e.g., components 30 illustrated in Figure 1, that includes functionality that analyzes messages to identify character strings and map corresponding auxiliary content into a message.

Additionally, it should be understood that the term "auxiliary content" may include various types of data as described above including any one of or combination of text, pictures, audio, video, links to web-sites or other locations of information, telephone numbers, electronic mail addresses, downloadable files including but not limited to audio files including ring tones, songs, etc, computer implemented games, video files, etc. Also, it is to be understood that the phraseology and terminology employed herein is for the purpose of description and should not be regarded as limiting.

Further, it should be understood that auxiliary content, in particular symbols to be inserted to replace predetermined character strings, may include favicon icons. A favorites icon, also known as a favicon, website icon, page icon or urlicon, is an icon associated with a particular website or webpage. Web designers conventionally use such an icon to trigger a web browser to display of an associated website or webpage when excited (e.g., clicked on). Browsers that support favicons may display them in the browser's URL bar, next to the site's name in lists of bookmarks, and next to the page's title in a tabbed document interface.

Conventionally, it is understood that favicons may be defined by placing a data file called favicon.ico in the root directory of a web server, which then automatically can be used in Internet Explorer™ favorites (bookmarks) display. Alternatively, the favicon can be created, using HTML to indicate the location of an icon for any given page. As a result, any appropriately sized (16×16 pixels or larger) image can be used, and although many still use the ICO format (a Microsoft™ image file format), other browsers may support animated Graphical Image Format (GIF) and PNG (Portable Network Graphics) image formats.

In accordance with at least one embodiment of the invention, a software application stored in a user terminal (e.g., user terminal 60, 70 illustrated in Figure 1) or an intermediate server (e.g., implemented in or in connection with components 30 illustrated in Figure 1) in a communication network may be configured to modify message to change all or some URL's, web addresses or brand names to be icons of the brand names, websites, etc. For example a user could send a message "Have you seen this book in Amazon.com;" based on mapping and replacement performed in accordance with at least one embodiment of the invention, the message could be enhanced according to read "Have you seen this book in 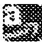 ?" where the symbol could be retrieved automatically by the terminal (either the originating or recipient terminal) from, e.g., http://www.amazon.com/favicon.ico, the intermediate server or the originating terminal.

It should be appreciated that, in accordance with at least one embodiment of the invention a predefined character string may include a URL, web address or brand name.

It should be appreciated that software and functionality implemented via firmware or hardware associated with the invention can be device and transport independent. Thus, in an implementation where analysis of message content is performed on a user's user terminal, the client application code or instruction may be implemented as stand alone software or, for example, downloadable software, or could be implemented using one or more conventionally known web-based solutions.

Further, it should be understood that, in accordance with at least one embodiment of the invention, system components may be implemented together or separately and there may be one or more of any or all of the disclosed system components. Further, system components may be either dedicated systems or such functionality may be implemented as virtual systems implemented on general purpose equipment via software implementations.

Further, it should be understood that, although the above method descriptions may relate expressly to SMS or electronic mail messaging, at least one embodiment of the invention may be utilized in connection with electronic mail, Instant Messaging (IM) and MMS or any other communication format.

Additionally, the selection of auxiliary content may alternatively or also be performed based on characteristics of the originator of the message or recipient of the message, e.g., interests, geographic location, demographic information, etc., to the extent that this information is known. Moreover, the "character strings" referred to above which are replaced by auxiliary content may include keywords, e.g., "movie," "book," "dinner," "music," etc.

Additionally, to the extent that auxiliary content includes proprietary data, e.g., trademarks, likeness or images associated with celebrities and/or entertainment, music snippets, etc, it should be understood that the auxiliary content may be stripped out of a message if the enhanced message is sent to a secondary recipient that is not within a group or community that has subscribed to a service that enhances messages in the manner described above. Alternatively, a sending party may subscribe to a level of service that enables the retransmission of such auxiliary content for a higher fee or on a limited basis. In this way, the use and dissemination of proprietary data such as music, celebrity likenesses, etc., could be policed so as to maintain their value.

## Claims

1. A messaging system (20) for processing messages transmitted between terminals (60, 70) through a data communications network (40), the messages each comprising transmission information identifying a receiving party of the message, and a message body at least partly specified by a sending party, the messaging system comprising:
data storage means (50) arranged to store:
a plurality of predetermined character strings;
auxiliary content corresponding to the predetermined character strings, including first auxiliary content corresponding to a first of said plurality of predetermined character strings and second auxiliary content, different to the first auxiliary content, corresponding to said first of said plurality of predetermined character strings; and
characteristic information relating to messaging parties, the characteristic information comprising profile information; and
an interface arranged to receive said messages,
wherein, responsive to receipt of a said message, the messaging system (20) is arranged to:
identify one of said predetermined character strings contained in a message body of the message;
identify a receiving party of the message on the basis of the transmission information;
select auxiliary content corresponding to the identified predetermined character string, wherein, in the case that the identified predetermined character string comprises said first predetermined character string, characteristic information relating to the identified receiving party is identified from the storage means and auxiliary content is selected from said first auxiliary content and said second auxiliary content on the basis of profile information from the identified characteristic information;
modify the received message to include data which results in the identified predetermined character string being replaced by the selected auxiliary content when the message is accessed on a terminal; and
send the modified messages to a terminal associated with the identified receiving party.

2. A messaging system (20) according to claim 1, wherein the data included in the modified message comprises data which results in a terminal retrieving said selected auxiliary content in response to the message being accessed on the terminal.

3. A messaging system (20) according to claim 2, the system being arranged to select different auxiliary content in respect of a first message access to that selected in respect of a second message access.

4. A messaging system (20) according to claim 3, wherein the auxiliary content retrieved in respect of the first message access is retrieved from a different data storage means to that from which the auxiliary content retrieved in respect of the second message access is retrieved.

5. A messaging system (20) according to any preceding claim, wherein the characteristic information comprises information relating to the capabilities of said terminal associated with the identified receiving party.

6. A messaging system (20) according to claim 5, wherein the characteristic information comprises information relating to formats of content with which the terminal associated with the identified receiving party is compatible, and selecting auxiliary content comprises selecting auxiliary content with which said terminal is compatible.

7. A messaging system (20) according to any preceding claim, wherein the transmission information identifies a sending party of the message, and, in the case that the identified predetermined character string comprises said first predetermined character string, the messaging system is arranged to identify a sending party of the message from the transmission information and identify characteristic information relating to the identified sending party, and the auxiliary content is selected on the basis of identified characteristic information relating to the identified sending party in addition to the identified characteristic information relating to the identified receiving party.

8. A messaging system (20) according to any preceding claim, wherein data storage means (50) is arranged to store group data indicating groups of users and the selection of auxiliary content is further performed on the basis of whether the receiving party belongs to one or more of said groups of users and optionally wherein the auxiliary content is selected on the further basis of whether the sending party belongs to a said group.

9. A method of processing a message sent between terminals (60,70) in a telecommunications network, the telecommunications network comprising data storage means (50) arranged to store characteristic data relating to messaging parties, the characteristic information comprising profile information, the messaging parties including a sending party and a receiving party, the data storage means (50) being further arranged to store predetermined character strings and auxiliary content corresponding to the predetermined character strings, the method comprising:
receiving a message comprising transmission information identifying a receiving party of the message, and a message body at least partly specified by a sending party of the message, the message body comprising one of said predetermined character strings;
in response to receiving the message, identifying, on the basis of the transmission information, a receiving party of the message and identifying said one of said predetermined character strings;
determining one or more sets of auxiliary content corresponding to the identified predetermined character string; and,
in the case that it is determined that there are a plurality of sets of auxiliary content associated with the identified predetermined character string:
accessing, from the data storage means, characteristic data associated with the identified receiving party;
selecting a set of auxiliary content from the determined plurality of sets of auxiliary content on the basis of profile information from the accessed characteristic data;
modifying the message to include data such that the identified predetermined character strings is replaced by the selected set of auxiliary content when rendered on a terminal; and
sending the message to a terminal associated with the identified receiving party.

10. A method according to claim 9, in which the data included in the modified message comprises data arranged such that the terminal associated with the identified receiving party acquires the selected auxiliary content in response to the message being accessed.

11. A method according to either of claim 9 and claim 10, in which the message is modified such that, in the case that the modified message is further sent to a further terminal, when accessed on the further terminal, the message comprises further auxiliary content, and the method optionally comprises
selecting the further auxiliary content in response to a request from the further terminal, and on the basis of characteristic information associated with a user of the further terminal.

12. A method according to claim 11, comprising determining whether the user of the further terminal is authorised to receive auxiliary content, wherein the further auxiliary content is selected in response to determining that the user of the further terminal is authorised.

13. A method according to claim 12, in which data storage means (50) is arranged to store group data indicating groups of users, and determining whether the user is authorised comprises accessing the group data from the data storage means (50) and determining whether the user of the further terminal is a member of a group.

14. A method according to any of claim 9 to claim 13, comprising, subsequently to sending the message, sending data to the terminal associated with the identified receiving party that results in a change in the selected auxiliary content.

15. A computer-program product arranged, when run on a computer or a suite of computers, to cause the computer to perform the method of any of claim 9 to claim 14.

## Patentansprüche

1. Nachrichtensystem (20) zum Verarbeiten von Nachrichten, die zwischen Endgeräten (60, 70) mittels eines Datenkommunikationsnetzwerks (40) übertragen werden, wobei die Nachrichten jeweils eine einen Empfangsteilnehmer der Nachricht identifizierende Übertragungsinformation und einen wenigstens teilweise von einem Sendeteilnehmer spezifizierten Nachrichtenhauptteil umfassen, wobei das Nachrichtsystem umfasst:
Datenspeichermittel (50) ausgebildet zum Speichern:
einer Vielzahl von vorbestimmten Zeichenfolgen;
eines den vorbestimmten Zeichenfolgen entsprechenden Hilfsinhalts mit einem einer ersten der Vielzahl vorbestimmter Zeichenfolgen entsprechenden ersten Hilfsinhalt und einem der ersten der Vielzahl vorbestimmter Zeichenfolgen entsprechenden zweiten Hilfsinhalt, der vom ersten Hilfsinhalt verschieden ist; und
einer auf Nachrichtenteilnehmer bezogenen charakteristischen Information, wobei die charakteristische Information eine Profilinformation umfasst; und
eine Schnittstelle ausgebildet zum Empfangen der Nachrichten, wobei das Nachrichtensystem ausgebildet ist, auf einen Empfang einer der Nachrichten hin:
eine der vorbestimmten Zeichenfolgen zu identifizieren, die in dem Nachrichtenhauptteil der Nachricht enthalten ist;
basierend auf der Übertragungsinformation einen Empfangsteilnehmer der Nachricht zu identifizieren;
einen der identifizierten vorbestimmten Zeichenfolge entsprechenden Hilfsinhalt auszuwählen, wobei, für den Fall, dass die identifizierte vorbestimmte Zeichenfolge die erste vorbestimmte Zeichenfolge umfasst, eine charakteristische Information betreffend den identifizierten Empfangsteilnehmer in dem Speichermittel identifiziert wird und ein Hilfsinhalt von dem ersten Hilfsinhalt und dem zweiten Hilfsinhalt basierend auf einer Profilinformation der identifizierten charakteristischen Information ausgewählt wird;
die empfangene Nachricht durch Einfügen von Daten zu modifizieren, wodurch die identifizierte vorbestimmte Zeichenfolge durch den ausgewählten Hilfsinhalt ersetzt wird, wenn auf einem Endgerät auf die Nachricht zugegriffen wird; und
die modifizierte Nachricht an ein dem identifizierten Empfangsteilnehmer zugeordnetes Endgerät zu senden.

2. Nachrichtensystem (20) nach Anspruch 1, wobei die in der modifizierten Nachricht enthaltenen Daten solche Daten umfassen, dass ein Endgerät auf einen Zugriff der Nachricht auf dem Endgerät hin den ausgewählten Hilfsinhalt beschafft.

3. Nachrichtsystem (20) nach Anspruch 2, wobei das System ausgebildet ist, Hilfsinhalt im Zusammenhang mit einem ersten Nachrichtenzugriff auszuwählen, der von einem Hilfsinhalt, der im Zusammenhang mit einem zweiten Nachrichtenzugriff ausgewählt worden ist, verschieden ist.

4. Nachrichtsystem (20) nach Anspruch 3, wobei der im Zusammenhang mit dem ersten Nachrichtenzugriff beschaffte Hilfsinhalt von einem Datenspeichermittel beschafft wird, welches von dem, mit dem der Hilfsinhalt im Zusammenhang mit dem zweiten Nachrichtenzugriff beschafft wird, verschieden ist.

5. Nachrichtsystem (20) nach einem der vorhergehenden Ansprüche, wobei die charakteristische Information eine Information betreffend die Fähigkeiten des dem identifizierten Empfangsteilnehmer zugeordneten Endgeräts umfasst.

6. Nachrichtsystem (20) nach Anspruch 5, wobei die charakteristische Information eine Formate betreffende Information umfasst, mit denen das dem identifizierten Empfangsteilnehmer zugeordnete Endgerät kompatibel ist, und wobei das Auswählen eines Hilfsinhalts ein Auswählen eines mit dem Endgerät kompatiblen Hilfsinhalts, umfasst.

7. Nachrichtsystem (20) nach einem der vorhergehenden Ansprüche, wobei die Übertragungsinformation einen Sendeteilnehmer der Nachricht identifiziert, und wobei, für den Fall, dass die identifizierte vorbestimmte Zeichenfolge die erste vorbestimmte Zeichenfolge umfasst, das Nachrichtensystem ausgebildet ist, einen Sendeteilnehmer der Nachricht mit Hilfe der Übertragungsinformation zu identifizieren und eine charakteristische Information betreffend den identifizierten Sendeteilnehmer zu identifizieren, und wobei der Hilfsinhalt basierend auf einer identifizierten charakteristischen Information betreffend den identifizierten Sendeteilnehmer zusätzlich zu der identifizierten charakteristischen Information betreffend den identifizierten Empfangsteilnehmer ausgewählt wird.

8. Nachrichtsystem (20) nach einem der vorhergehenden Ansprüche, wobei das Datenspeichermittel (50) ausgebildet ist, Gruppen von Nutzern identifizierende Gruppendaten zu speichern, und wobei die Auswahl eines Hilfsinhalts des Weiteren durchgeführt wird auf der Basis, ob der Empfangsteilnehmer zu einer oder mehreren der Gruppen von Nutzern gehört, und wobei optional der Hilfsinhalt ausgewählt wird auf der weiteren Basis, ob der Sendeteilnehmer zu einer der Gruppen gehört.

9. Verfahren zum Verarbeiten einer in einem Telekommunikationsnetzwerk zwischen Endgeräten (60, 70) gesendeten Nachricht, wobei das Telekommunikationsnetzwerk ein Datenspeichermittel (50) umfasst, das zum Speichern von charakteristischen Daten betreffend Nachrichtenteilnehmer ausgebildet ist, wobei die charakteristisch Information eine Profilinformation umfasst und die Nachrichtenteilnehmer einen Sendeteilnehmer und einen Empfangsteilnehmer beinhalten, und wobei das Datenspeichermittel (50) weiter ausgebildet ist, vorbestimmte Zeichenfolgen und einen den vorbestimmten Zeichenfolgen entsprechenden Hilfsinhalt zu speichern, wobei das Verfahren umfasst:
Empfangen einer Nachricht, die eine einen Empfangsteilnehmer der Nachricht identifizierende Übertragungsinformation und einen wenigstens teilweise durch einen Sendeteilnehmer der Nachricht spezifizierten Nachrichtenhauptteil umfasst, wobei der Nachrichtenhauptteil eine der vorbestimmten Zeichenfolgen umfasst;
auf das Empfangen der Nachricht hin, Identifizieren eines Empfangsteilnehmers der Nachricht basierend auf der Übertragungsinformation und Identifizieren einer der vorbestimmten Zeichenfolgen;
Bestimmen eines oder mehrerer der identifizierten vorbestimmten Zeichenfolge entsprechenden Sätze von Hilfsinhalt; und,
für den Fall, dass bestimmt wird, dass es eine Vielzahl von Sätzen von der identifizierten vorbestimmten Zeichenfolge zugeordnetem Hilfsinhalt gibt:
Zugreifen auf den identifizierten Empfangsteilnehmer zugeordnete charakteristische Daten auf dem Datenspeichermittel;
Auswählen eines Satzes von Hilfsinhalt von der bestimmten Vielzahl von Sätzen von Hilfsinhalt basierend auf einer Profilinformation der zugegriffenen charakteristischen Daten;
Modifizieren der Nachricht durch Hinzufügen von Daten, so dass die identifizierte vorbestimmte Zeichenfolge durch den ausgewählten Satz von Hilfsinhalt ersetzt wird, wenn die Nachricht auf einem Endgerät wiedergegeben wird; und
Senden der Nachricht an ein dem Empfangsteilnehmer zugeordnetes Endgerät.

10. Verfahren nach Anspruch 9, bei dem die in der modifizierten Nachricht enthaltenen Daten Daten umfassen, die so angeordnet sind, dass das dem identifizierten Empfangsteilnehmer zugeordnete Endgerät den ausgewählten Hilfsinhalt auf den Zugriff der Nachricht hin beschafft.

11. Verfahren nach Anspruch 9 oder nach Anspruch 10, bei dem die Nachricht derart modifiziert wird, dass für den Fall, dass die modifizierte Nachricht weiter an ein weiteres Endgerät gesendet wird, die Nachricht weiteren Hilfsinhalt umfasst, wenn auf sie auf dem weiteren Endgerät zugegriffen wird, und wobei das Verfahren optional umfasst:
Auswählen des weiteren Hilfsinhalts auf eine Anforderung des weiteren Endgeräts hin und basierend auf einer einem Nutzer des weiteren Endgeräts zugeordneten charakteristischen Information.

12. Verfahren nach Anspruch 11, umfassend ein Bestimmen, ob der Nutzer des weiteren Endgeräts autorisiert ist, Hilfsinhalt zu empfangen, wobei der weitere Hilfsinhalt auf das Bestimmen, dass der Nutzer des weiteren Endgeräts autorisiert ist, hin ausgewählt wird.

13. Verfahren nach Anspruch 12, bei dem das Datenspeichermittel (50) ausgebildet ist, Gruppen von Nutzern anzeigende Gruppendaten zu speichern, und bei dem das Bestimmen, ob der Nutzer autorisiert ist, ein Zugreifen auf die Gruppendaten auf dem Datenspeichermittel (50) und Bestimmen, ob der Nutzer des weiteren Endgeräts ein Mitglied einer Gruppe ist, umfasst.

14. Verfahren nach einem der vorhergehenden Ansprüche 9 bis 13, umfassend, nach dem Senden der Nachricht, Senden von Daten an das den identifizierten Empfangsteilnehmer zugeordnete Endgerät, was in einer Änderung in dem ausgewählten Hilfsinhalt resultiert.

15. Computerprogrammprodukt, das ausgebildet ist, wenn es auf einem Computer oder auf einer Gruppe von Computern ausgeführt wird, zu bewirken, dass der Computer das Verfahren gemäß einem der vorhergehenden Ansprüche 9 bis 14 ausführt.

## Revendications

1. Système de messagerie (20) pour traiter des messages transmis entre des terminaux (60, 70) à travers un réseau de communication de données (40), les messages comprenant chacun des informations de transmission identifiant une partie réceptrice du message et un corps de message au moins partiellement spécifié par une partie émettrice, le système de messagerie comprenant :
des moyens de stockage de données (50) agencés pour stocker :
une pluralité de chaînes de caractères prédéterminées ;
des contenus auxiliaires correspondant aux chaînes de caractères prédéterminées, comprenant un premier contenu auxiliaire correspondant à une première de ladite pluralité de chaînes de caractères prédéterminées et un deuxième contenu auxiliaire, différent du premier contenu auxiliaire, correspondant à ladite première de ladite pluralité de chaînes de caractères prédéterminées ; et
des informations caractéristiques relatives à des parties de messagerie, les informations caractéristiques comprenant des informations de profil ; et
une interface agencée pour recevoir lesdits messages,
dans lequel, en réponse à la réception d'un dit message, le système de messagerie (20) est adapté pour :
identifier une desdites chaînes de caractères prédéterminées contenues dans un corps de message du message ;
identifier une partie réceptrice du message sur la base des informations de transmission ;
sélectionner un contenu auxiliaire correspondant à la chaîne de caractères prédéterminée identifiée, dans lequel, dans le cas où la chaîne de caractères prédéterminée identifiée comprend ladite première chaîne de caractères prédéterminée, les informations caractéristiques relatives à la partie réceptrice identifiée sont identifiées à partir des moyens de stockage et un contenu auxiliaire est sélectionné parmi ledit premier contenu auxiliaire et ledit deuxième contenu auxiliaire sur la base d'informations de profil provenant des informations caractéristiques identifiées ;
modifier le message reçu pour inclure des données qui en entraînent le remplacement de la chaîne de caractères prédéterminée identifiée par le contenu auxiliaire sélectionné lors de l'accès au message sur un terminal ; et
envoyer les messages modifiés à un terminal associé à la partie réceptrice identifiée.

2. Système de messagerie (20) selon la revendication 1, dans lequel les données incluses dans le message modifié comprennent des données qui entrainent la récupération par un terminal dudit contenu auxiliaire sélectionné en réponse à l'accès au message sur le terminal.

3. Système de messagerie (20) selon la revendication 2, le système étant agencé pour sélectionner un contenu auxiliaire différent par rapport à un premier accès au message de celui sélectionné par rapport à un deuxième accès au message.

4. Système de messagerie (20) selon la revendication 3, dans lequel le contenu auxiliaire récupéré par rapport au premier accès au message est récupéré à partir d'un moyen de stockage de données différent de celui à partir duquel le contenu auxiliaire est récupéré par rapport au deuxième accès au message.

5. Système de messagerie (20) selon l'une quelconque des revendications précédentes, dans lequel les informations caractéristiques comprennent des informations relatives aux capacités dudit terminal associé à la partie réceptrice identifiée.

6. Système de messagerie (20) selon la revendication 5, dans lequel les informations caractéristiques comprennent des informations relatives à des formats de contenu avec lesquels le terminal associé à la partie réceptrice identifiée est compatible, et la sélection du contenu auxiliaire comprend la sélection du contenu auxiliaire avec lequel ledit terminal est compatible.

7. Système de messagerie (20) selon l'une quelconque des revendications précédentes, dans lequel les informations de transmission identifient une partie émettrice du message et, dans le cas où la chaîne de caractères prédéterminée identifiée comprend ladite première chaîne de caractères prédéterminée, le système de messagerie est agencé pour identifier une partie émettrice du message à partir des informations de transmission et identifier des informations caractéristiques relatives à la partie émettrice identifiée, et le contenu auxiliaire est sélectionné sur la base d'informations caractéristiques identifiées relatives à la partie émettrice identifiée en plus des informations caractéristiques identifiées relatives à la partie réceptrice identifiée.

8. Système de messagerie (20) selon l'une quelconque des revendications précédentes, dans lequel les moyens de stockage de données (50) sont agencés pour stocker des données de groupe indiquant des groupes d'utilisateurs et la sélection de contenu auxiliaire est exécutée en outre sur la base du fait que la partie réceptrice appartient à un ou plusieurs desdits groupes d'utilisateurs et, en option, dans lequel le contenu auxiliaire est sélectionné sur la base ultérieure du fait que la partie émettrice appartient à un dit groupe.

9. Procédé pour le traitement d'un message transmis entre des terminaux (60, 70) dans un réseau de télécommunication, le réseau de télécommunication comprenant des moyens de stockage de données (50) agencés pour stocker des données caractéristiques relatives à des parties de messagerie, les informations caractéristiques comprenant des informations de profil, les parties de messagerie comprenant une partie émettrice et une partie réceptrice, les moyens de stockage de données (50) étant agencés en outre pour stocker des chaînes de caractères prédéterminées et des contenus auxiliaires correspondant aux chaînes de caractères prédéterminées, le procédé comprenant :
la réception d'un message comprenant des informations de transmission identifiant une partie réceptrice du message et un corps de message au moins partiellement spécifié par une partie émettrice du message, le corps de message comprenant une desdites chaînes de caractères prédéterminées ;
en réponse à la réception du message, l'identification, sur la base des informations de transmission, d'une partie réceptrice du message et l'identification de ladite une desdites chaînes de caractères prédéterminées ;
la détermination d'un ou plusieurs ensembles de contenu auxiliaire correspondant à la chaîne de caractères prédéterminée identifiée ; et
dans le cas où il est déterminé qu'il existe une pluralité d'ensembles de contenu auxiliaire associés à la chaîne de caractères prédéterminée identifiée :
l'accès, à partir des moyens de stockage de données, à des données caractéristiques associées à la partie réceptrice identifiée ;
la sélection d'un ensemble de contenu auxiliaire parmi la pluralité déterminée d'ensembles de contenu auxiliaire sur la base d'informations de profil provenant des données caractéristiques auxquelles il a été accédé ;
la modification du message pour inclure des données telles que les chaînes de caractères prédéterminées identifiées soient remplacées par l'ensemble sélectionné de contenu auxiliaire quand elles sont reproduites sur un terminal ; et
l'envoi du message à un terminal associé à la partie réceptrice identifiée.

10. Procédé selon la revendication 9, dans lequel les données incluses dans le message modifié comprennent des données agencées de sorte que le terminal associé à la partie réceptrice identifiée acquière le contenu auxiliaire sélectionné en réponse à l'accès au message.

11. Procédé selon la revendication 9 et la revendication 10, dans lequel le message est modifié de sorte que, dans le cas où le message modifié est envoyé ultérieurement à un terminal ultérieur, lors de l'accès sur le terminal ultérieur, le message comprenne un contenu auxiliaire ultérieur, et le procédé comprend en option
la sélection du contenu auxiliaire ultérieur en réponse à une requête provenant du terminal ultérieur et sur la base d'informations caractéristiques associées à un utilisateur du terminal ultérieur.

12. Procédé selon la revendication 11, comprenant la détermination du fait que l'utilisateur du terminal ultérieur est autorisé à recevoir un contenu auxiliaire, dans lequel le contenu auxiliaire ultérieur est sélectionné en réponse à la détermination du fait que l'utilisateur du terminal ultérieur est autorisé.

13. Procédé selon la revendication 12, dans lequel les moyens de stockage de données (50) sont agencés pour stocker des données de groupe indiquant des groupes d'utilisateurs, et la détermination du fait que l'utilisateur est autorisé comprend l'accès aux données de groupe à partir des moyens de stockage de données (50) et la détermination du fait que l'utilisateur du terminal ultérieur est un membre d'un groupe.

14. Procédé selon l'une quelconque des revendications 9 à 13, comprenant, consécutivement à l'envoi du message, l'envoi de données au terminal associé à la partie réceptrice identifiée qui entraîne une modification dans le contenu auxiliaire sélectionné.

15. Produit de programme d'ordinateur agencé, quand il est exécuté sur un ordinateur ou une série d'ordinateurs, pour forcer l'ordinateur à exécuter le procédé selon l'une quelconque des revendications 9 à 14.
